# EUROPEAN PATENT APPLICATION

(11) **EP 4 586 136 A1**
(43) Date of publication of application: **16.07.2025**
(21) Application number: 23888916.6
(22) Date of filing: 21.09.2023
(51) Int. Cl.: G06F 40/58, G06F 40/51, G06F 40/263, G10L 15/26, G10L 15/00

(54) **ELECTRONIC DEVICE AND CONTROL METHOD THEREFOR**

(30) Priority: 09.11.2022 KR 20220148940
(71) Applicant: Samsung Electronics Co., Ltd., Suwon-si, Gyeonggi-do 16677 (KR)
(72) Inventor: LEE, Beomseok, Suwon-si Gyeonggi-do 16677 (KR); RYU, Yonghyun, Suwon-si Gyeonggi-do 16677 (KR); BAHK, Cheongyo, Suwon-si Gyeonggi-do 16677 (KR); JUNG, Jungho, Suwon-si Gyeonggi-do 16677 (KR); CHOI, Yoonjung, Suwon-si Gyeonggi-do 16677 (KR)
(74) Representative: Gulde & Partner
(86) International application number: PCT/KR2023/014370
(87) International publication number: WO 2024/101652

(57) **Abstract**

An electronic device and a controlling method thereof are provided. The electronic device includes memory storing at least one instruction and at least one processor connected to the memory to control the electronic device, and the at least one processor is configured to, by executing the at least one instruction, obtain first text data in a target language by inputting text data in a first language corresponding to a first video frame section into a text translation model, obtain second text data in the target language by inputting voice data in a second language corresponding to the first video frame section into a voice translation model, and obtain final text data in the target language for the first video frame section by inputting the first and second text data in the target language into a correction model.

## Description

### [Technical Field]

The present disclosure relates to an electronic device and a controlling method thereof, and more particularly to, an electronic device that translates a video content into text data in a target language and a controlling method thereof.

### [Background Art]

Recently, various video contents are being provided. In particular, as opportunities to access various video contents from other countries increase, there is a growing need for translation of video contents provided in other languages.

The translation of the existing video contents was provided by translating voice data of the video contents or translating the subtitle data, but there was a problem that accessibility of users was low due to poor accuracy of the translation unless human translation was provided.

In addition, when a person directly translates and uploads the subtitle data for the video contents, the accuracy may be high, but there is a problem of high translation costs and limited work speed. As a result, there is a limitation in that the foreign language video contents accessible to users can only be provided on a limited scale.

### [Disclosure]

### [Technical Solution]

An electronic device according to an embodiment includes memory storing at least one instruction and least one processor connected to the memory to control the electronic device. The at least one processor is configured to, by executing the at least one instruction, obtain first text data in a target language by inputting text data in a first language corresponding to a first video frame section into a text translation model. The at least one processor obtains second text data in the target language by inputting voice data in a second language corresponding to the first video frame section into a voice translation model. The at least one processor obtains final text data in the target language for the first video frame section by inputting the first and second text data in the target language into a correction model.

An electronic device according to an embodiment includes memory storing at least one instruction and at least one processor connected to the memory to control the electronic device. The at least one processor is configured to, by executing the at least one instruction, obtain text data in a target language for a first video frame section by inputting the first video frame section, text data in a first language corresponding to the first video frame section and voice data in a second language corresponding to the first video frame section into a trained translation model.

A controlling method of an electronic device according to an embodiment includes acquiring first text data in a target language by inputting text data in a first language corresponding to a first video frame section into a text translation model, acquiring second text data in the target language by inputting voice data in a second language corresponding to the first video frame section into a voice translation model, and acquiring final text data in the target language for the first video frame section by inputting the first and second text data in the target language into a correction model.

A controlling method of an electronic device according to an embodiment includes acquiring a first video frame section, text data in a first language corresponding to the first video frame section and voice data in a second language corresponding to the first video frame section, and acquiring text data in a target language for the first video frame section by inputting the first video frame section, the text data in the first language corresponding to the first video frame section and the voice data in the second language corresponding to the first video frame section into a trained translation model.

In a computer-readable storage medium storing a program for executing a controlling method of an electronic device according to an embodiment, the controlling method of the electronic device includes acquiring first text data in a target language by inputting text data in a first language corresponding to a first video frame section into a text translation model, acquiring second text data in the target language by inputting voice data in a second language corresponding to the first video frame section into a voice translation model, and acquiring final text data in the target language for the first video frame section by inputting the first and second text data in the target language into a correction model.

In a computer-readable storage medium storing a program for executing a controlling method of an electronic device according to an embodiment, the controlling method of the electronic device includes acquiring a first video frame section, text data in a first language corresponding to the first video frame section and voice data in a second language corresponding to the first video frame section, and acquiring text data in a target language for the first video frame section by inputting the first video frame section, the text data in the first language corresponding to the first video frame section and the voice data in the second language corresponding to the first video frame section into a trained translation model.

### [Description of Drawings]

FIG. 1 is a block diagram illustrating configuration of an electronic device according to an embodiment;
FIG. 2 is a block diagram including configuration for translating a video content according to an embodiment;
FIG. 3 is a view provided to explain data obtained from a video content according to an embodiment;
FIG. 4A is a view provided to explain a method of acquiring first text data in a target language by translating text data in a first language according to an embodiment;
FIG. 4B is a view provided to explain a method of acquiring second text data in a target language by translating voice data in a second language according to an embodiment;
FIG. 5 is a view provided to explain a method of acquiring final text data using first and second text data according to an embodiment;
FIG. 6 is a view provided to explain a method of acquiring third text data in a target language using an video frame according to an embodiment;
FIG. 7 is a view provided to explain a method of acquiring final text data using first to third text data according to an embodiment;
FIG. 8 is a flowchart provided to explain a controlling method of an electronic device for translating a video content including multilingual data according to an embodiment;
FIG. 9 is a view provided to explain a method of acquiring final text data by inputting multilingual data into one translation model according to another embodiment; and
FIG. 10 is a flowchart provided to explain a controlling method of an electronic device for translating a video content including multilingual data according to another embodiment.

### [Detailed Description of Embodiments]

Hereinafter, various embodiments of the present disclosure are described. However, it should be understood that the embodiments are not intended to limit the technology of the present disclosure to specific embodiments, but rather includes various modifications, equivalents, and/or alternatives of the embodiments of the present disclosure.

In the disclosure, the expressions "have", "may have", "include" or "may include" used herein indicate existence of corresponding features (e.g., elements such as numeric values, functions, operations, or components), but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used only in order to distinguish one component from the other components, and do not limit the corresponding components. For example, the first user device and the second user device may represent different user devices, regardless of sequence or importance. For example, without departing from the scope of the rights set forth in this document, the first component may be referred to as the second component, and similarly, the second component may also be referred to as the first component.

In exemplary embodiments, terms "module", "unit", "part", "engine", etc. are used to refer to components that perform at least one function or operation, and such components may be implemented as hardware or software or as a combination of hardware and software. In addition, a plurality of "modules", "units", "parts", "engines", etc. may be integrated into at least one module or chip and be implemented as a processor except for a case where each of them needs to be implemented as specific hardware.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element). On the other hand, when an element (e.g., a first element) is referred to as being "directly coupled with/to" or "directly connected to" another element (e.g., a second element), it should be understood that there is no intervening element (e.g., a third element) in-between.

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily mean "specifically designed to" in hardware. Instead, an expression "~an apparatus configured to" may mean that an apparatus "is capable of" together with other apparatuses or components. For example, a "processor configured (or set) to perform A, B, and C" may mean a dedicated processor (e.g., an embedded processor) for performing the corresponding operations or a generic-purpose processor (e.g., a central processing unit (CPU) or an application processor) that may perform the corresponding operations by executing one or more software programs stored in a memory device.

The terms used in the present disclosure are merely used to describe specific embodiments and may not be intended to limit the scope of other embodiments. Singular expressions may include plural expressions, unless the context clearly indicates otherwise. Terms used herein, including technical or scientific terms, may have the same meaning as generally understood by a person of ordinary skill in the technical field described in this disclosure. Among the terms used in this disclosure, terms defined in general dictionaries may be interpreted to have the same or similar meaning as the meaning they have in the context of related technology, and unless clearly defined in this disclosure, they are not to be interpreted in an idealistic or overly formal sense. In some cases, even terms defined in the present disclosure cannot be interpreted to exclude embodiments of the present disclosure.

Hereinafter, the present disclosure will be described in greater detail with reference to the accompanying drawings. However, in describing the present disclosure, when it is decided that a detailed description for the known functions or configurations related to the disclosure may unnecessarily obscure the gist of the disclosure, the detailed description therefor will be omitted. Throughout the description of the accompanying drawings, similar components may be denoted by similar reference numerals.

Meanwhile, in the prior art, the following methods were used to translate a video content. In one example, an electronic device 100 inputs subtitle data (i.e., text data) in a first language included in the video content to a text translation model to obtain text data in a target language. In this case, there was a limitation that if the performance of the text translation model was poor or if some words were omitted or paraphrased in the input subtitle data, the translation of the video content was inaccurate. In another example, the electronic device 100 inputs voice data in the first language into a voice recognition model to obtain text data of a first language, and inputs text data of a first language to a text translation model to obtain text data in the target language. In this case, since the final translation result is obtained through two learning models, a problem exists that the reliance on a voice recognition model is increased, and the output of the text translation model is affected by the output of the voice recognition model. In other words, if either the voice recognition model or the text translation model performs poorly, the translation quality is reduced. In another example, the electronic device 100 inputs voice data in the first language to a voice translation model to obtain text data in the target language. In this case, if the performance of the voice translation model was poor, there is also a limitation that the translation of the video content would be inaccurate.

According to an embodiment, a plurality of text data can be obtained using various types of multi-modal data (e.g., text data, voice data, video data, etc.), and final text data that translates the video content can be obtained using the plurality of data obtained. In addition, according to an embodiment, it is possible to translate a video content more accurately by using multi-lingual data (e.g., text data in the first language, voice data in the second language, etc.

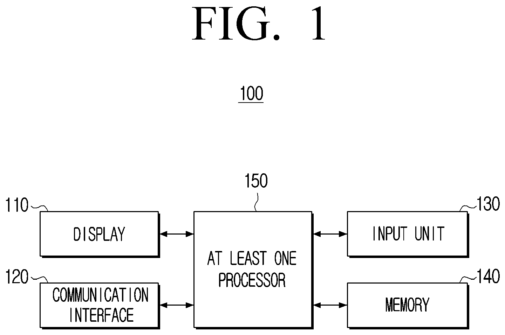

Hereinafter, the present disclosure will be described in greater detail with reference to the accompanying drawings. FIG. 1 is a block diagram illustrating configuration of an electronic device according to an embodiment. As shown in FIG. 1, the electronic device 100 may include a display 110, a communication interface 120, an input unit 130, memory 140, and at least one processor 150. Meanwhile, the electronic device 100 according to an embodiment may be an electronic device such as smartphone, tablet PC, notebook PC, desktop PC, or the like, but this is only one embodiment, and may also be a device such as a server. Further, depending on the type of electronic device, some of the configurations shown in FIG. 1 may be removed, and other configurations may be added.

The display 110 may output various information. In particular, the display 110 may display video content provided from various sources. For example, display 110 may output a broadcast content or a game content received via the communication interface 120. Alternatively, the display 110 may output a broadcast content or a game content from an external device connected via an input/output interface (e.g., HDMI, etc.). Alternatively, the display 110 may output a video content stored in the memory 140.

Further, the display 110 may output various UIs. In particular, the display 110 may output a UI for selecting a type of language desired by the user. Further, the display 110 may output subtitle data on the video content. In this case, the subtitle data may be subtitle data in the target language selected by the user.

The display 110 may be implemented as a liquid crystal display panel (LCD), organic light emitting diodes (OLED), or the like, and the display 110 may also be implemented as a flexible display, a transparent display, or the like in some cases.

The communication interface 120 includes at least one circuit and may perform communication with various types of external devices or servers. The communication interface 120 may include at least one of an IR module, a Bluetooth Low Energy (BLE) module, a Wi-Fi communication module, an Ultra Wide Band (UWB) module, a cellular communication module, a third generation (3G) cellular communication module, a fourth generation (4G) cellular communication module, a fourth generation Long Term Evolution (LTE) communication module, or a fifth generation (5G) cellular communication module.

In particular, the communication interface 120 may obtain data about a video content from an external source. In addition, the communication interface 120 may receive information about various neural network models such as a text translation model, a voice translation model, a scene understanding model, and the like, from an external server.

The input unit 130 includes circuitry, and the at least one processor 150 may receive a user command to control the operations of the electronic device 100 via the input unit 130. Specifically, the input unit 130 may consist of a configuration such as a touch screen, buttons, a keyboard, a mouse, and a microphone.

In particular, the input unit 130 may receive a user command to select a target language to be translated among a plurality of languages.

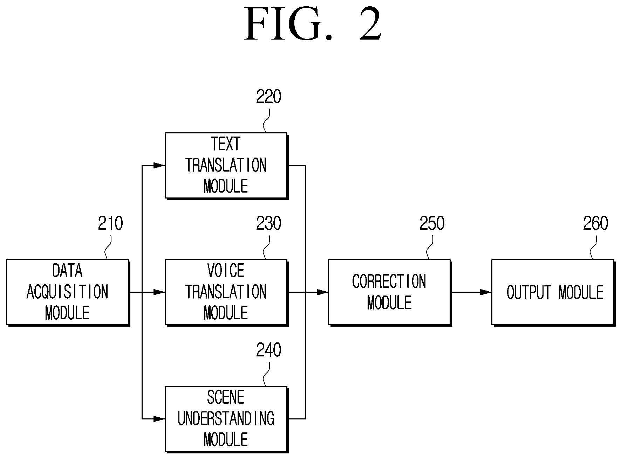

The memory 140 may store an operating system (OS) for controlling the overall operations of the components of the electronic device 100 and instructions or data related to the components of the electronic device 100. In particular, the memory 140 may include a data acquisition module 210, a text translation module 220, a voice translation module 230, a scene understanding module 240, a correction module 250, and an output module 260, as illustrated in FIG. 2, for translating a video content including various types of data. In particular, when a user command to translate video content is input, a module for translating video content including various types of data stored in a nonvolatile memory may load data for performing various operations into a volatile memory. Here, loading means an operation of loading and storing data stored in a nonvolatile memory into a volatile memory so that at least one processor (150) can access it instructions or data related to the components of the electronic device 100 and an operating system (OS) for controlling the overall behavior of the components of the electronic device 100. In particular, the memory 140 can include a data acquisition module 210, a text translation module 220, a voice translation module 230, a scene understanding module 240, a correction module 250, and an output module 260, as shown in FIG. 2, for translating video content comprising various types of data. In particular, when a user command to translate a video content is entered, the module for translating the video content, which may include various types of data stored in non-volatile memory, may load the data into volatile memory for performing various operations. Here, loading refers to the operation of loading data stored in the non-volatile memory into the volatile memory for access by the at least one processor 150.

Further, the memory 140 may store various neural network model such as a text translation model, a voice translation model, a scene understanding model, and a correction model, and the like. It should be noted that storing various neural network models such as a text translation model, a voice translation model, a scene understanding model, and a correction model, and the like in the memory 140 is only one embodiment, and that various neural network models such as a text translation model, a voice translation model, a scene understanding model, and a correction model, and the like may be stored in an external server.

Meanwhile, the memory 140 may be implemented as non-volatile memory (e.g., hard disk, solid state drive (SSD), flash memory), volatile memory (which may also include memory within the at least one processor 150), and the like.

The at least one processor 150 may control the electronic device 100 according to at least one instruction stored in the memory 140. In particular, the at least one processor 150 may input text data in the first language corresponding to a first video frame section into the text translation model to obtain first text data in the target language. The at least one processor 150 input voice data in the second language corresponding to the first video frame section into the voice translation model to obtain second text data in the target language. The at least one processor 150 inputs the first and second text data in the target language to the correction model to obtain final text data in the target language for the first video frame section.

The at least one processor 150 may input at least one video frame of the first video frame section into the scene understanding model to obtain third text data in the target language describing the first video frame section. The at least one processor 150 may then input the first to third text data in the target language to the correction model to obtain final text data in the target language for the first video frame section.

Further, the at least one processor 150 may identify a type of the first language based on at least one of the metadata or the text data in the first language. Further, the at least one processor 150 may identify a text translation model corresponding to the identified type of first language and the type of target language. The at least one processor 150 may input the text data in the first language into the identified text translation model to obtain first text data in the target language.

The at least one processor 150 may identify a type of the second language based on at least one of the metadata or the voice data in the second language. The at least one processor 150 may identify a voice translation model corresponding to the identified type of the second language and the type of the target language. The at least one processor 150 may input the voice data in the second language into the identified voice translation model to obtain second text data in the target language.

Alternatively, the text translation model may be a text translation model trained to translate text data in an arbitrary language into text data in the target language. Alternatively, the voice translation model may be a voice translation model trained to translate voice data in an arbitrary language into text data in the target language.

In this case, the first language, the second language, and the target language may all be different types of languages .

Further, the correction model may be a neural network model trained to correct a plurality of text data into single text data.

Meanwhile, according to another embodiment, the at least one processor 150 may input the first video frame section, the text data in the first language corresponding to the first video frame section, and the voice data in the second language corresponding to the first video frame section to a trained translation model to obtain text data in the target language for the first video frame section.

FIG. 2 is a block diagram including configuration for translating a video content according to an embodiment. As shown in FIG. 2, the electronic device 100 may include a data acquisition module 210, a text translation module 220, a voice translation module 230, a scene understanding module 240, a correction module 250, and an output module 260.

The data acquisition module 210 may obtain data about a video content from various sources. The data about the video content may include a plurality of video frames included in the video content, subtitle data (or text data), voice data, metadata , and the like. In this case, the subtitle data may be text data in the first language (e.g., Japanese), and the voice data may be voice data in the second language (e.g., English). Further, the metadata may include additional information about the video content, subtitle data, and voice data.

Further, the data acquisition module 210 may obtain data about the video content, and separate the obtained data to obtain a plurality of video frames, voice data, and subtitle data.

The text translation module 220 may input the subtitle data in the first language obtained from the data acquisition module 210 into the text translation model to obtain the first text data in the target language. In one embodiment of the present disclosure, the text translation module 220 may identify a type of the first language based on at least one of the metadata or the text data in the first language. Specifically, the text translation module 220 may identify the type of the first language based on information about the language type of the subtitle data stored in the metadata or information about the language type obtained by analyzing the subtitle data in the first language. The text translation module 220 may then identify a text translation model corresponding to the identified type of the first language and the type of the target language. For example, when the type of the first language is Japanese and the type of the target language is Korean, the text translation module 220 may identify a Japanese-Korean text translation model as the text translation model for translating the subtitle data. Subsequently, the text translation module 220 may input the subtitle data of the first language into the identified text translation model to obtain the first text data in the target language.

In another embodiment, the text translation module 220 may obtain the first text data in the target language by inputting the subtitle data of the first language to a text translation model that is trained to translate text data in an arbitrary language into text data in the target language. In other words, the text translation module 220 may obtain the first text data in the target language by inputting the subtitle data in the first language to the text translation model without the process of identifying the type of the first language.

The voice translation module 230 may input the voice data in the second language obtained from the data acquisition module 210 into the voice translation model to obtain the second text data in the target language. In one embodiment of the present disclosure, the voice translation module 230 may identify a type of the second language based on at least one of the metadata or the voice data in the second language. Specifically, the voice translation module 230 may identify the type of the second language based on information about the language type of the voice data stored in the metadata or information about the type of language obtained by analyzing the voice data in the second language. The voice translation module 230 may then identify a voice translation model corresponding to the identified type of the second language and the type of the target language. For example, when the type of the second language is English and the type of the target language is Korean, the voice translation module 230 may identify an English-Korean voice translation model as the voice translation model for translating the voice data. Subsequently, the voice translation module 230 may input the voice data in the second language into the identified voice translation model to obtain the second text data in the target language. Meanwhile, the second language may be of a different type than the first language, but this is only an example, and it may be of the same type.

In another embodiment, the voice translation module 230 may obtain the second text data in the target language by inputting the voice data in the second language into the text translation model trained to translate voice data in an arbitrary language into text data in the target language. In other words, the voice translation module 230 may obtain the second text data in the target language by inputting the voice data in the second language into the voice translation model without the process of identifying the type of the second language.

The scene understanding module 240 may input at least one video frame of a plurality of video frames included in a video content into the scene understanding model to obtain third text data in the target language describing the at least one video frame. In other words, the scene understanding module 240 may obtain the third text data in the target language describing the at least one video frame, such as information about types of objects included in the at least one video frame, information about relationships between the objects, information about motion of the objects, and the like, through the scene understanding model. In this case, the third text data in the target language may be implemented as a sentence, which is only one embodiment, and may include at least one word.

The correction module 250 may input at least two of the first text data obtained by the text translation module 220, the second text data obtained by the voice translation module 230, and the third text data obtained by the scene understanding module 240 into the correction model to obtain the final text data. In this case, the correction model may be trained to correct a plurality of text data into single text data. However, this is only one embodiment that the correction model is a trained neural network model, and the correction model may be a rule-based model.

Meanwhile, the correction module 250 may filter at least one text data of the plurality of text data, and input the filtered text data into the correction model to obtain the final text data. In other words, the correction module 250 may identify the text data that is unrelated to the other text data among the plurality of text data, and filter the identified text identified data.

The output module 260 may output the final text data obtained by the correction module 250. For example, when the electronic device 100 is implemented as a user terminal such as a smartphone, the output module 260 may output the obtained final text data as subtitle data via the display 110. Alternatively, the electronic device 100 may convert the obtained final text data into voice data via a natural language generation model and output it to a speaker. As another example, when the electronic device 100 is implemented as a server, the output module 260 may output the obtained final text data to an external device.

Meanwhile, although the above-described embodiments describe the text translation module 220, the voice translation module 230, the scene understanding module 240, and the correction module 250 as acquiring text data through the text translation model, the voice translation model, the scene understanding model, and the correction model stored in the electronic device 100, this is only one embodiment, and at least on text data may be obtained through at least one of the text translation model, the voice translation model, the scene understanding model, or the correction model stored in an external device (in particular, a server).

Meanwhile, although the above-described embodiment describes the voice translation module 230 as acquiring the second text data through the voice translation model, this is only one embodiment, and the voice translation module 230 may obtain the second text data through the voice recognition model and the text translation model. Specifically, the voice translation module 230 may input the voice data in the second language into the voice recognition model to obtain the text data in the second language, and input the text data in the second language into the text translation model to obtain the second text data in the target language.

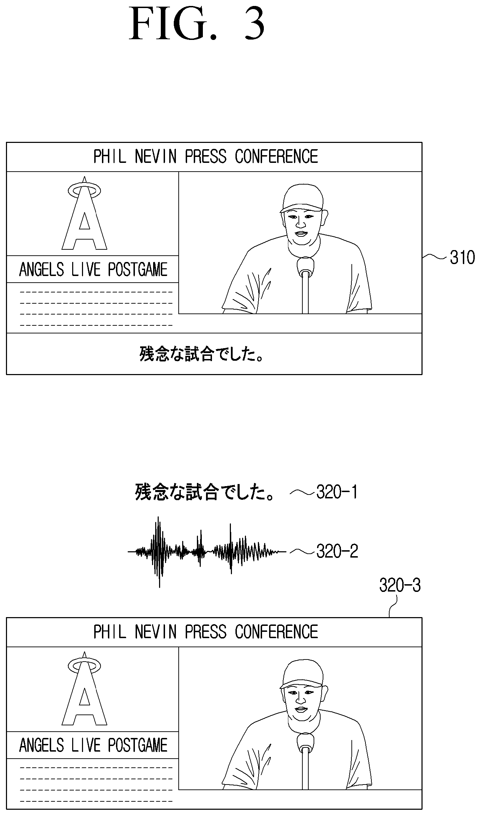

Hereinafter, a method of translating a video content according to an embodiment will be described with reference to FIGS. 3 to 7.

According to an embodiment, the electronic device 100 may obtain data about a video content. Specifically, the electronic device 100 may obtain data about the video content by streaming the video content in real time, but this is only one embodiment, and the electronic device 100 may download and store data about the video content from an external source.

Subsequently, the electronic device 100 may obtain text data (or subtitle data), voice data, and at least one video frame from data on the video content. In particular, the electronic device 100 may obtain a first video frame section, text data corresponding to the first video frame section, and voice data corresponding to the first video frame section.

For example, as shown in FIG. 3, the electronic device 100 may obtain data about a video content 310. Subsequently, the electronic device 100 may obtain text data 320-1 in the first language, voice data 320-2 in the second language, and at least one video frame 320-3 from the obtained data about the obtained video content 310. In one example, the first language may be Japanese and the second language may be English. In other words, the video content shown in FIG. 3 may be a video content including voice data in English and subtitle data in Japanese.

Further, the text data 320-1 in the first language, the voice data 320-2 in the second language, and the at least one video frame 320-3 may be data output from the same video frame section.

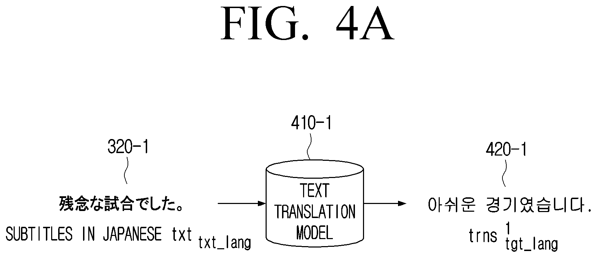

The electronic device 100 may input the text data in the first language into a text translation model to obtain the first text data in the target language. For example, as shown in FIG. 4A, , the electronic device 100 may input the text data 320-1 in the first language, " 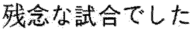 ," into a text translation model 410-1 to obtain first text data 420-1 in the target language, " 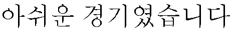 ."

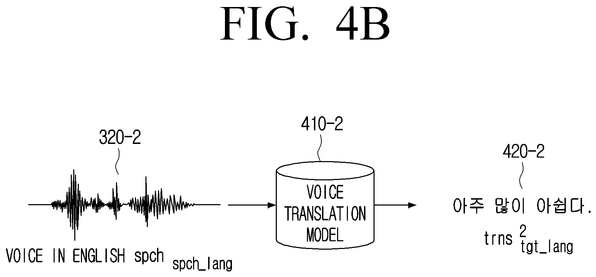

The electronic device 100 may input the voice data in the second language into a voice translation model to obtain the first text data in the target language. In this case, the voice data in the second language may be output in the same video frame section as the text data in the first language. For example, as shown in FIG. 4B, the electronic device 100 may input the voice data 320-2 in the second language into a voice translation model 410-2 to obtain second text data 420-2 in the target language, " 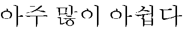 ." In other words, the electronic device 100 may further obtain information about the emotion of the utterance that is not revealed in the text data (subtitle data) through the voice translation model.

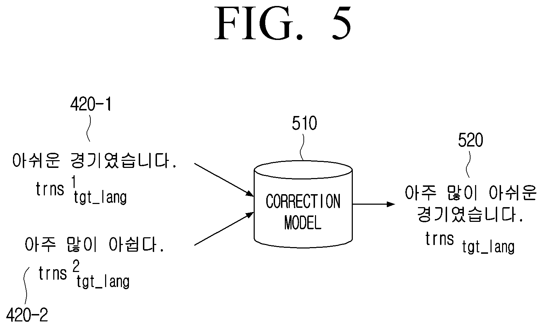

The electronic device 100 may input the first text data in the target language and the second text data in the target language into a correction model to obtain the final text data. For example, as illustrated in FIG. 5, the electronic device 100 may input the first text data 420-1 in the target language and the second text data 420-2 in the target language into a correction model 510 to obtain final text data 520, " 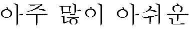 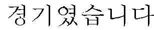 ." Subsequently, the electronic device 100 may output the obtained final text data 520, " 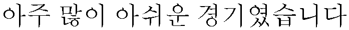 ."

In another embodiment, the electronic device 100 may obtain final text data by further using the third text data describing a current video frame obtained through a video frame.

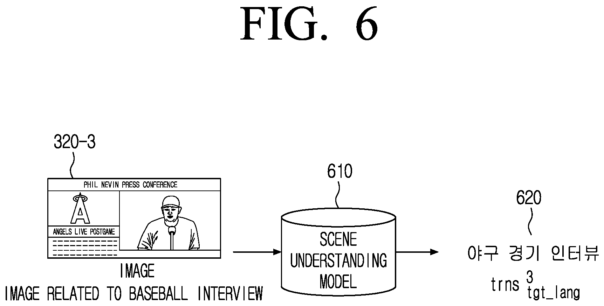

Specifically, the electronic device 100 may input at least one video frame of the first video frame section that outputs text data in the first language and voice data in the second language into a scene understanding model to obtain third text data describing the at least one video frame. For example, as shown in FIG. 6, the electronic device 100 may input at least one video frame 320-3 into a scene understanding model 610 to obtain the third text data describing the at least one video frame, " 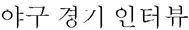 ".

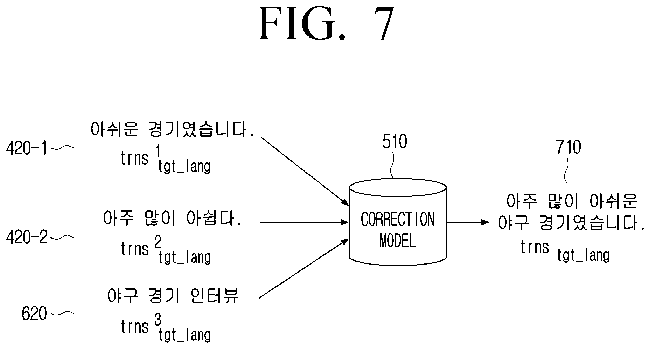

Subsequently, the electronic device 100 may input the first to third text data in the target language into the correction model to obtain the final text data. For example, as illustrated in FIG. 7, the electronic device 100 may input the first to third text data 420-1,420-2,620 in the target language into the correction model 510 to obtain final text data 710, " 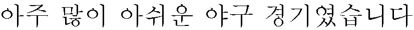 ." Then, the electronic device 100 may output the obtained final text data 710, " 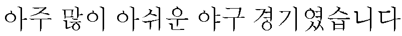 ."

In other words, by further considering the third text data obtained through the scene understanding model, the electronic device 100 may be able to provide the user with additional information about the situation and context that was not obtained by translating the voice data and the subtitle data.

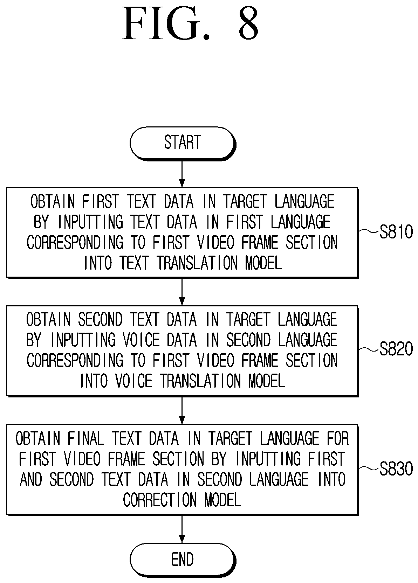

FIG. 8 is a flowchart provided to explain a controlling method of an electronic device for translating a video content including multilingual data according to an embodiment.

The electronic device 100 inputs the text data in the first language corresponding to the first video frame section into the text translation model to obtain the first text data in the target language (S810). In one embodiment, the electronic device 100 may identify a type of the first language based on at least one of the metadata or the text data of the first language. The electronic device 100 may identify a text translation model corresponding to the identified type of first language and the type of target language. The electronic device 100 may then input the text data in the first language into the identified text translation model to obtain the first text data in the target language. In another embodiment, the electronic device 100 may obtain the first text data in the target language by inputting the text data in the first language into the text translation model that is trained to translate the text data in an arbitrary language into the text data in the target language.

The electronic device 100 inputs the voice data in the second language corresponding to the first video frame section into the voice translation model to obtain the second text data in the target language (S820). In one embodiment, the electronic device 100 may identify a type of the second language based on at least one of the metadata or the voice data of the second language. The electronic device 100 may identify a voice translation model corresponding to the identified type of second language and the type of target language. The electronic device 100 may then input the voice data in the second language into the identified voice translation model to obtain the second text data in the target language. In another embodiment, the electronic device 100 may obtain the second text data in the target language by inputting the voice data in the second language into the voice translation model that is trained to translate the voice data in an arbitrary language into the text data in the target language.

The electronic device 100 may input the first text data and the second text data in the target language into the correction model to obtain the final text data in the target language for the first video frame section (S830). In this case, the correction model may be a model trained to correct a plurality of text data into single text data.

Further, the electronic device 100 may input at least one video frame of the first video frame section into the scene understanding model to obtain the third text data in the target language describing the first video frame section. Subsequently, the electronic device 100 may input the first text data to the third text data in the target language into the correction model to obtain the final text data in the target language for the first video frame section.

Meanwhile, according to an embodiment, the first language, the second language, and the target language may all be different types of languages.

As described above, by obtaining subtitle data for video frame sections through various types of data in multiple languages, it is possible to perform more accurate translation of video contents.

In one embodiment, in a case where translation is difficult with subtitles alone, such as in proverbs, more accurate translation may be possible according to an embodiment of the present disclosure. For example, when the subtitle data " 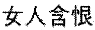 , 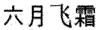 " in the first language (e.g., Chinese) is obtained and input into the text translation model, the electronic device 100 may obtain "A woman with hatred, June flying frost" as text data in the target language (e.g., English). However, when voice data in the second language (e.g., Korean) is input into the voice translation model to additionally obtain the second text data, " 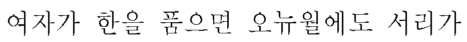 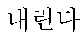 . " and the first text data obtained through the text data in the first language and the second text obtained through the voice data in the second language are input into the correction model, the electronic device 100 may obtain "Hell hath no fury like a woman scorned" as the final text data.

In another embodiment, in a case where it is difficult to translate a voice or subtitles alone, such as when there are homonyms or subjects are omitted in the voice, more accurate translation may be possible according to an embodiment of the present disclosure. In other words, the electronic device 100 may determine the exact meaning of homonyms through multiple types of data, and may identify omitted subjects or objects, etc., thereby making more accurate translation possible.

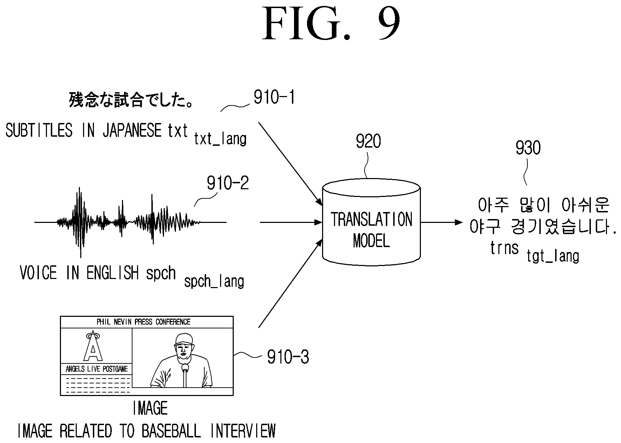

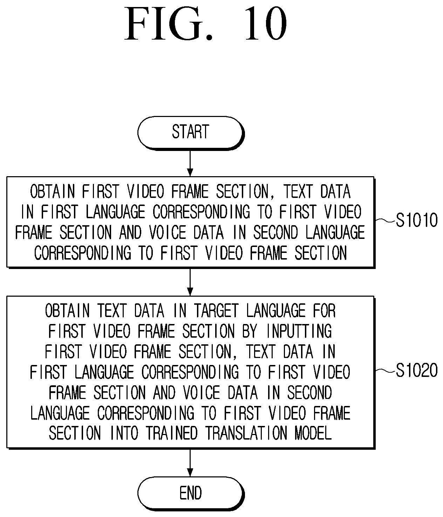

Meanwhile, although the above-described embodiments are described as inputting a plurality of types of data related to the video content into different models to obtain a plurality of text data, and obtaining single final text data through the obtained plurality of data, this is only one embodiment, and a plurality of types of data related to the video content can be input into a single translation model to obtain single final text data. Hereinafter, the above case will be described in greater detail with reference to FIGS. 9 and 10.

Specifically, the electronic device 100 may input the first video frame section, the text data in the first language corresponding to the first video frame section, and the voice data in the second language corresponding to the first video frame section into a trained translation model to obtain text data in the target language for the first video frame section. For example, as shown in FIG. 9, the electronic device 100 may input text data 910-1 in the first language corresponding to the first video frame section, voice data 910-2 in the second language corresponding to the first video frame section, and at least one video frame 910-3 of the first video frame sections into a trained translation model 920 to obtain final text data 930, " 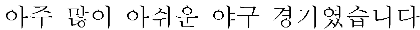 ." The electronic device 100 may then output the final text data 930, " 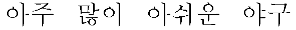 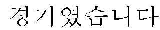 ."

In this case, the trained translation model 920 may be a model trained using the text data in the first language, the voice data in the second language, the video frame, and the text data in the target language that have the same or similar meanings as the training data.

In particular, the electronic device 100 may preprocess different types of text data in the first language, voice data in the second language, and the video frame into the same type of data (e.g., matrix data of a preset size, etc.) before inputting them into the trained translation model 920. In other words, the electronic device 100 may identify a language type of the text data in the first language and preprocess the text data in the first language into first intermediate data of a preset size based on the identified language type. The electronic device 100 may identify a language type of the voice data in the second language and preprocess the voice data in the second language into second intermediate data of a preset size based on the identified language type. The electronic device 100 may preprocess the video frame into third intermediate data of a preset size. The electronic device 100 may then input the first to third intermediate data into the trained translation model 920 to obtain the final text data.

FIG. 10 is a flowchart provided to explain a controlling method of an electronic device for translating a video content including multilingual data according to another embodiment.

The electronic device 100 obtains the first video frame section, the text data in the first language corresponding to the first video frame section, and the voice data in the second language corresponding to the first video frame section (S1010). In other words, the electronic device 100 may obtain the text data in the first language, the voice data in the second language, and at least one video frame played in the same section.

Subsequently, the electronic device 100 inputs the first video frame section, the text data in the first language corresponding to the first video frame section, and the voice data in the second language corresponding to the first video frame section into the trained translation model to obtain the text data in the target language for the first video frame section (S1020). In other words, the electronic device 100 may input multilingual and various types of data into one translation model to obtain subtitle data in the target language the user wants the data to be translated in.

Meanwhile, functions related to artificial intelligence according to the present disclosure (e.g., learning function and inference function for a neural network model) are operated through the processor and memory of the server.

The processor may consist of one or a plurality of processors. In this case, the one or more processors may include at least one of a central processing unit (CPU), a graphics processing unit (GPU), or a neural processing unit (NPU), but are not limited to examples of the above-described processors.

The CPU is a generic-purpose processor which may perform not only general calculations but also artificial intelligence calculations, and may efficiently execute complex programs through a multi-layered cache structure. The CPU may be advantageous for a serial processing method that enables organic linkage between the previous calculation result and the next calculation result through sequential calculation. The generic--purpose processor is not limited to the above examples except for a case where the processor is specified as the above-mentioned CPU.

The GPU is a processor for large-scale operations such as floating-point operations used for graphics processing, and may perform the large-scale operations in parallel by integrating a large number of cores. In particular, the GPU may be advantageous for a parallel processing method such as a convolution operation or the like, compared to the CPU. In addition, the GPU may be used as a co-processor to supplement a function of the CPU. The processor for the large-scale operations is not limited to the above example except for a case where the processor is specified as the above-mentioned GPU.

The NPU is a processor specialized in artificial intelligence calculation using an artificial neural network, and each layer constituting the artificial neural network may be implemented as hardware (e.g., silicon). In this case, the NPU is specially designed based on requirements of a company, and may thus have a lower degree of freedom compared to the CPU or the GPU. However, the NPU may efficiently process the artificial intelligence calculation required by the company. Meanwhile, as the processor specialized for the artificial intelligence calculation, the NPU may be implemented in various forms such as a tensor processing unit (TPU), an intelligence processing unit (IPU), or a vision processing unit (VPU). The artificial intelligence processor is not limited to the above example except for a case where the processor is specified as the above-mentioned NPU.

In addition, the one or more processors may be implemented as a system on chip (SoC). Here, the SoC may further include memory and a network interface such as a bus for data communication between the processor and the memory in addition to the one or more processors.

In case that the system on chip (SoC) included in the electronic device 100 includes a plurality of processors, the electronic device 100 may use some of the plurality of processors to perform the artificial intelligence calculation (e.g., calculation related to the learning or inference of an artificial intelligence model). For example, the electronic device 100 may perform the artificial intelligence calculation by using at least one of the GPU, NPU, VPU, TPU, or a hardware accelerator that is specialized for the artificial intelligence calculation such as convolution calculation and matrix multiplication calculation among the plurality of processors. However, this is only an example, and the artificial intelligence calculation may be processed using a generic-purpose processor such as the CPU.

In addition, the server may perform calculation for a function related to the artificial intelligence by using multi-cores (e.g., dual-core or quad-core) included in one processor. In particular, the server may perform the artificial intelligence calculation such as the convolution calculation and the matrix multiplication calculation in parallel using the multi-cores included in the processor.

The one or more processors may control to process the input data based on a predefined operation rule or an artificial intelligence model stored in the memory. The predefined operation rule or artificial intelligence model may be acquired by the learning.

Here, "acquired by the learning" may indicate that the predefined operation rule or artificial intelligence model of a desired feature is acquired by applying a learning algorithm to a lot of learning data. Such learning may be performed on a device itself where the artificial intelligence is performed according to an embodiment, or by a separate server/system.

The artificial intelligence model may consist of a plurality of neural network layers. At least one layer has at least one weight value, and calculation of the layer may be performed through an operation result of a previous layer and at least one defined operation. Examples of the neural network may include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, and a transformer. However, the neural network in this disclosure is not limited to the above examples except for a case where a type of the neural network is specified.

The learning algorithm is a method of training a preset target device by using a large number of learning data for the preset target device to make a decision or a prediction by itself. The learning algorithms may include, for example, a supervised learning algorithm, an unsupervised learning algorithm, a semi-supervised learning algorithm, or a reinforcement learning algorithm, but the learning algorithm of the disclosure is not limited to the above-described examples, unless specified otherwise.

In addition, the methods according to the various embodiments of the present disclosure may be included and provided in a computer program product. The computer program product may be traded as a product between a seller and a purchaser. The computer program product may be traded as a product between a seller and a purchaser. The computer program product can be distributed in the form of a storage medium that is readable by machines (e.g.: a compact disc read only memory (CD-ROM)), or distributed directly on-line (e.g.: download or upload) through an application store (e.g.: PlayStore^{™}), or between two user devices (e.g.: smartphones). In the case of on-line distribution, at least a portion of a computer program product (e.g.: a downloadable app) may be stored in a storage medium readable by machine such as the server of the manufacturer, the server of the application store, or the memory of the relay server at least temporarily, or may be generated temporarily.

The methods according to various embodiments of the present disclosure may be implemented as software including instructions stored in a machine-readable storage medium, which can be read by machine (e.g.: computer). The machine refers to a device that calls instructions stored in a storage medium, and can operate according to the called instructions, and the device may include an electronic device according to the afore-disclosed embodiments.

Meanwhile, the machine-readable storage medium may be provided in the form of a non-transitory storage medium. Here, the term 'non-transitory storage medium' means that the storage medium is tangible without including a signal (e.g., electromagnetic waves), and does not distinguish whether data are semi-permanently or temporarily stored in the storage medium. For example, a 'non-transitory storage medium' may include a buffer where data is temporarily stored.

In case where the instructions are executed by a processor, the processor may perform a function corresponding to the instructions by itself, or by using other components under its control. The instructions may include a code that is generated or executed by a compiler or an interpreter.

Although preferred embodiments of the present disclosure have been shown and described above, the disclosure is not limited to the specific embodiments described above, and various modifications may be made by one of ordinary skill in the art without departing from the spirit of the disclosure as claimed in the claims, and such modifications are not to be understood in isolation from the technical ideas or prospect of the disclosure.

## Claims

1. An electronic device comprising:
memory storing at least one instruction; and
at least one processor connected to the memory to control the electronic device,
wherein the at least one processor is configured to, by executing the at least one instruction:
obtain first text data in a target language by inputting text data in a first language corresponding to a first video frame section into a text translation model;
obtain second text data in the target language by inputting voice data in a second language corresponding to the first video frame section into a voice translation model; and
obtain final text data in the target language for the first video frame section by inputting the first and second text data in the target language into a correction model.

2. The device as claimed in claim 1, wherein the at least one processor is configured to:
obtain third text data in the target language describing the first video frame section by inputting at least one video frame of the first video frame section into a scene understanding model; and
obtain final text data in the target language for the first video frame section by inputting the first to third text data in the target language into the correction model.

3. The device as claimed in claim 1, wherein the at least one processor is configured to:
identify a type of the first language based on at least one of metadata or text data in the first language;
identify a text translation model corresponding to the identified type of the first language and a type of the target language; and
obtain first text data in the target language by inputting the text data in the first language into the identified text translation model.

4. The device as claimed in claim 1, wherein the at least one processor is configured to:
identify a type of the second language based on at least one of metadata or voice data in the second language;
identify a voice translation model corresponding to the identified type of the second language and a type of the target language; and
obtain second text data in the target language by inputting the voice data in the second language into the identified voice translation model.

5. The device as claimed in claim 1, wherein the text translation model is a text translation model trained to translate text data in an arbitrary language into text data in the target language; and
wherein the voice translation model is a voice translation model trained to translate voice data in an arbitrary language into text data in the target language.

6. The device as claimed in claim 1, wherein the first language, the second language and the target language are all different types of languages.

7. The device as claimed in claim 1, wherein the correction model is trained to correct multiple text data into one text data.

8. An electronic device comprising:
memory storing at least one instruction; and
at least one processor connected to the memory to control the electronic device,
wherein the at least one processor is configured to, by executing the at least one instruction:
obtain text data in a target language for a first video frame section by inputting the first video frame section, text data in a first language corresponding to the first video frame section and voice data in a second language corresponding to the first video frame section into a trained translation model.

9. A controlling method of an electronic device, the method comprising:
acquiring first text data in a target language by inputting text data in a first language corresponding to a first video frame section into a text translation model;
acquiring second text data in the target language by inputting voice data in a second language corresponding to the first video frame section into a voice translation model; and
acquiring final text data in the target language for the first video frame section by inputting the first and second text data in the target language into a correction model.

10. The method as claimed in claim 9, further comprising:
acquiring third text data in the target language describing the first video frame section by inputting at least one video frame of the first video frame section into a scene understanding model,
wherein the acquiring final text data in the target language comprises:
acquiring final text data in the target language for the first video frame section by inputting the first to third text data in the target language into the correction model.

11. The method as claimed in claim 9, wherein the controlling method further comprises:
identifying a type of the first language based on at least one of metadata or text data in the first language; and
identifying a text translation model corresponding to the identified type of the first language and a type of the target language,
wherein the acquiring first text data comprises:
acquiring first text data in the target language by inputting the text data in the first language into the identified text translation model.

12. The method as claimed in claim 9, wherein the controlling method further comprises:
identifying a type of the second language based on at least one of metadata or voice data in the second language;
identifying a voice translation model corresponding to the identified type of the second language and a type of the target language; and
acquiring second text data in the target language by inputting the voice data in the second language into the identified voice translation model.

13. The method as claimed in claim 9, wherein the text translation model is a text translation model trained to translate text data in an arbitrary language into text data in the target language; and
wherein the voice translation model is a voice translation model trained to translate voice data in an arbitrary language into text data in the target language.

14. The method as claimed in claim 9, wherein the first language, the second language and the target language are all different types of languages.

15. The method as claimed in claim 9, wherein the correction model is trained to correct multiple text data into one text data.
